# EUROPEAN PATENT APPLICATION

(11) **EP 1 117 141 A1**
(43) Date of publication of application: **18.07.2001**
(21) Application number: 00944371.4
(22) Date of filing: 10.07.2000
(51) Int. Cl.: H01M 4/62

(54) **CARBON POWDER HAVING ENHANCED ELECTRICAL CHARACTERISTICS AND USE OF THE SAME**

(30) Priority: 21.07.1999 JP 20649099
(71) Applicant: MITSUBISHI MATERIALS CORPORATION, Tokyo 100-8117 (JP)
(72) Inventor: KANDA, Eiko, Mitsubishi Materials Corp., Ohmiya-shi, Saitama 330-0835 (JP); IMAI, Hiroyuki, Mitsubishi Materials Corp., Ohmiya-shi, Saitama 330-0835 (JP); SHIRAISHI, Shinya, Mitsubishi Materials Corp., Ohmiya-shi, Saitama 330-0835 (JP)
(74) Representative: Gille Hrabal Struck Neidlein Prop Roos
(86) International application number: JP0004590
(87) International publication number: WO0106583

(57) **Abstract**

This invention relates with the carbon powder which is characterized to enhance the adhesive strength and the electrophretic nature to the electrode by including one or more than two of sulfur, nitrogen, boron, phosphorus, and fluorine, with 1 - 20wt% of oxygen. The second battery, which is added with the secondary battery activator comprising this surface modified carbon powder or with this surface modified carbon, has a long cell life, and when this carbon powder is added, the second battery, which cannot be charged/discharged, can be also regenerated.

## Description

### Technical Field

This invention relates to a carbon powder which enhanced the adhesive strength or electrophoretic nature to an electrode , and its application. The carbon powder of this invention is suitable for the activator of secondary batteries, such as a lead storage battery, etc., and can prolong its cell life, exhibit the outstanding charge/discharge performance, regenerate the secondary battery, by adding to the electrolytic solution of the secondary battery, mixing to the electrode active material, or making to adhere to the electrode surface.

### Background technology

The lead battery, which is a typical secondary battery, uses lead as a negative electrode, and uses lead, which has lead oxide on its surface, as a positive electrode, and has the structure dipping these electrodes in the dilute sulfuric acid. When the lead cell discharges, lead (Pb) on the surface of the negative electrode reacts with sulfate ion, and become lead sulfate (PbSO₄), and discharges electron. Then, receiving this electron, lead oxide (PbO₂) on the surface of the positive electrode reacts with sulfiric acid, and becomes lead sulfate. By this reaction, current flows in the lead battery. When the lead battery is charged, the reverse reaction at the time of the discharge occurs. Thus, the secondary battery has the advantage, which can be used for a long period of time, by repeating the charge and the discharge. However, the secondary battery loses activity gradually to become impossible to use.

As the activation method of this secondary battery, it is conventionally known to add the suspension of a good conductive carbon fine particle to an electrolytic solution to recover an electrical capacity. However, there were problems that many amount of addition is needed for the conventional carbon powders and the precipitation of these powders causes the troubles such as a short circuit, etc. Therefore, in order to avoid such problems, it was proposed that the secondary battery used the suspension of the carbon fine particles obtained by electrolytic oxidation (Tokukai Hei 09-045379) or the hydrophilic electric conductive particles which have an extremely fine (600nm or less of median sizes) particle size (Tokukai Hei 10-228922).

However, the secondary battery using the carbon fine particles obtained by electrolytic oxidation has the problems that the manufacture of said carbon particles is difficult and needs much power consumption to be high price. Moreover, it is said that this carbon particles has a hydrophilic nature by the carbonyl group and carboxyl group which modified on the surface of said carbon particles, and has the property to adsorb to the positive electrode at the time of the charge. However, it is hard to adsorb this carbon particle to the positive electrode in fact. On the other hand, since such extremely fine carbon particles are easy to aggregate, its dispersibility is low and difficult to use. Furthermore, the former activator is unstable in an acid electrolytic solution, and the effect is decreased comparatively in a short time by the repeat of the charge/discharge, so that the said activator does not have durability.

### Object of invention

This invention offers the carbon powder being suitable as the secondary battery activator, which solves the conventional above-mentioned problems, and its applications. That is to say, the object of this invention offers the carbon powder, which has good adhesive strength or electrophoretic nature to the electrode, excellent effect for prolonging the cell life and for regeneration of charge of the cell, when said carbon powder is added to the secondary battery. Moreover, the object of this invention offers the secondary battery, which is added the secondary battery activator comprising this carbon powder and this carbon powder.

### Summary of invention

That is to say, this invention is relates to the carbon powder characterized enhancing the adhesive strength to the negative electrode, by including 0.1 - 2 wt % of one or more than two of sulfur, nitrogen, boron, phosphorus, and fluorine, with 1 - 20wt% of oxygen.

These oxygen, sulfur, and nitrogen, etc. introduced in the carbon powder are fixed in a surface structure and, in an X-ray diffraction pattern, when a Cu-Kα radiation source was used as X radiation source, said carbon powder has graphite structure, in which the diffraction line having a loose gradient toward the diffraction peak of [002] face, in the area from 20 degrees of diffraction angle (2θ) to the diffraction peak of [002] face. This loose gradient is the loose continuous standup, in which, for example, said gradient passes the point that, the relative intensity of the diffraction line to the diffraction line [002] face shows 1/50 times or more, and tends toward the diffraction peak of [002] face, in the range of the diffraction angle (2θ) is 23.5 - 24.5 degrees. The detail example of this carbon powder is the carbon powder, in which the surface structure at least included 1 - 20 wt % of oxygen and 0.1 - 2 wt % of sulfur.

The carbon powder of this invention, which has the excellent adhesive strength or electrophoretic nature to the negative electrode, can be obtained by doing the surface treatment of the carbon powder, with strong acid having strong oxidation work and including one or more of sulfur, nitrogen, boron, phosphorus, and fluorine, or with strong acid which is added the oxidizing agent and including one or more of said elements. The carbon powder of this invention includes such ones that have been done the surface treatment. Concretely, the carbon powder which is done the surface treatment by the following acids, for example, (1) strong acids that are added the oxidizing agent in sulfuric-acid system strong acids, poly-phosphoric acid and fluorine acid, and (2) the mixed acids of nitric acid and sulfuric acid system strong acids, poly-phosphoric acid, fluorine acid, boric acid or phosphoric acid.

These carbon powders of this invention is suitable as the activator of the secondary battery. This secondary battery activator is used as the following activators, i.e., for example, the secondary battery activator characterizes to comprise a dispersed composition which was made to disperse these carbon powders in the polar solvent, and the lead cell activator is characterized to comprise the dispersed composition which was made to disperse these carbon powder in the sulfuric acid aqueous solution. Whichever the state of a paste and a liquid is sufficient as these dispersed compositions.

Moreover, this invention offers the secondary batteries, which characterizes to be added these carbon powders to the electrolytic solution, to be added these carbon powders to an electrode active material, and to make these carbon powders to adhere to the electrode surface. These secondary batteries have a long life and the excellent charge/discharge regeneration ability.

### Brief explanation of figures

Fig. 1 is the X-ray diffraction figure of the carbon powder of this invention.

Fig. 2 is the X-ray diffraction figure of the conventional graphite powder.

Fig. 3 is the graph showing the result of Example 2.

Fig. 4 is the graph showing the result of Example 3.

Fig. 5 is the graph showing the result of Example 4.

### Detailed explanation of invention

### [The carbon powder]

Hereafter, this invention is explained in detail with the examples. The carbon powder of this invention characterizes to enhance the adhesive strength to the negative electrode, by making to include one or more of 0.1 - 2wt% of sulfur, nitrogen, boron, phosphorus, and fluorine, with 1 - 20wt% of oxygen. This carbon powder includes the amorphous (non-crystalline) carbon powder, which comprises a graphitizing carbon (soft carbon ) or a non-graphitizing carbon (hard carbon), other than the graphite (crystalline substance) carbon powder, which comprises natural graphite or man-made graphite. Specifically, the carbon powders including graphite, coke, resin baking carbon, carbon fiber, pyrolysis vapor-growth carbon, meso-carbon micro bead, furfuryl-alcohol-resin cracking carbon, poly-acene, pitch based carbon fiber, graphite whisker, carbon nanofiber, and carbon nanotube, etc. The hydrophilic carbon powder is obtained by doing the surface modification treatment, which introduced sulfur, nitrogen, etc., with oxygen to the carbon powder, and so that, when the carbon powder is added to the electrolytic solution etc., the said powder becomes the suspension, in which said powder is dispersed homogeneously in the liquid. In addition, it is explained that the carbon powder obtained by electrolytic oxidation is adsorbed to the anode (positive electrode). However, the carbon powder of this invention is suspended in the electrolytic solution, and adheres to the negative electrode at the time of the charge. For example, when the carbon powder of this invention is added to the lead storage battery electrolytic solution (dilute sulfuric acid) and the electric potential of 1-2V is applied for 5 minutes or more, the suspended carbon powder in the liquid adheres to the negative electrode. The conductivity of the electrode active material is improved by this electrodeposition and, moreover, an ion exchange performance increases and an electronic exchange between the electrolytic solution and the electrode is activated, by generating the bubbles near the electrode. Then, consequently, the life of the cell is prolonged and its electrical capacity is increased. In addition, even when the carbon powder of this invention is mixed in the electrode active material, the same effect is obtained.

The carbon powder includes sulfur, nitrogen, etc. with oxygen and it means that these elements at least have been fixed to the surface structure of the carbon powder. Therefore, since said powder differs from the carbon powder, in which these elements are only adsorbed on the surface of it, for example, even if said powder is boiled to wash, these elements are not eluted substantially. Concretely, after the carbon powder of this invention was added to distilled water to boil, filtered after cooled, and dried to obtain the carbon powder, which remained on the filter paper, the amount of included elements was investigated. Consequently, the amount of the included elements, such as oxygen, sulfur, and nitrogen, was not substantially changed with before the test. Moreover, both of the amount of the sulfur, nitrogen, etc. in the filtrated solution is less than 0.01wt%.

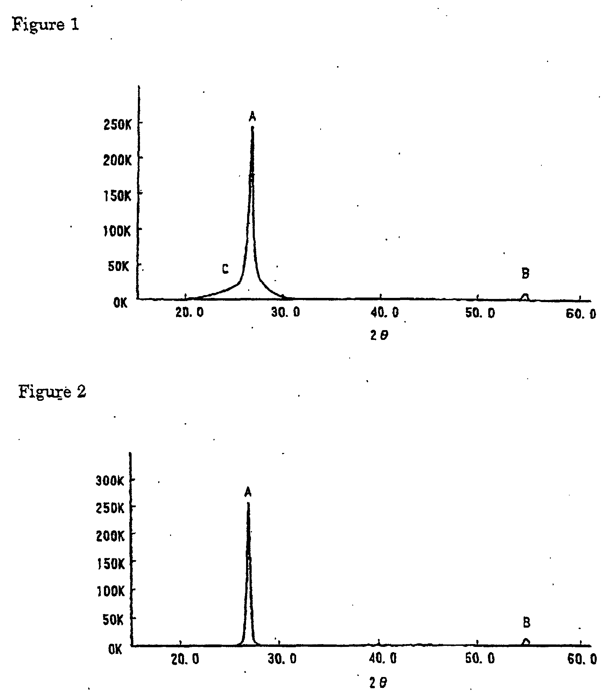

Thus, in the carbon powder of this invention, since sulfur, nitrogen, etc. has been fixed in the surface structure with oxygen, in the graphite type carbon, when the Cu-Kα radiation source is used as the radiation source of X-ray, in the X-ray diffraction pattern, the diffraction line has the loose gradient toward to the diffraction peak of [002] face, in the range from 20 degrees of diffraction angle (2θ) to the diffraction peak of [002] face. Fig. 1 is the X-ray diffraction pattern of the carbon (graphite) powder, which was introduced the predetermined amount of oxygen and sulfur. As shown in this figure, when the CU-Kα radiation source was used, the loose gradient of the diffraction line, which is from 20 degrees of the diffraction angle (2θ) to the diffraction peak A of [002] face, is seen with the diffraction peak A of [002] face and B of [004] face of the graphite (hexagonal system). In the part for this loose gradient, for example, the diffraction line passes the point, which shows that the relative intensity of diffraction peak to the diffraction peak of [002] face is 1/50 times or more, and continues the diffraction peak A of [002] face, in the range of 23.5 - 24.5 of diffraction angle (2θ). On the other hand, as shown in Fig.2, in the X-ray diffraction pattern of the usual graphite powder, which is not introduced with oxygen and sulfur, the diffraction peaks of A of [002] face and B of [004] face have stood up rapidly, and the loose gradient which appears in the carbon powder of this invention is not seen. The carbon powder of this invention, which has the graphite structure, has such a characteristic feature in the X-ray diffraction pattern. In addition, amorphous-carbon powder such as carbon black, cannot be confirmed such diffraction peaks in the X-ray diffraction. However, the same effect as the case of graphite powder can be obtained by making to include the predetermined amount of oxygen, sulfur and nitrogen.

The amount of oxygen included in the carbon powder is suitable for 1 - 20wt% and 0.1 - 2wt% of sulfur and nitrogen, etc., included with oxygen is suitable. When the amount of oxygen included in the carbon powder is less than 1wt%, the effect does not exist, and even if the amounts of oxygen is more than 20wt%, the effect does not change substantially. On the other hand, when the included amount of sulfur, nitrogen, boron, phosphorus, or fluorine is less than 0.1wt%, the dispersibility in the electrolytic solution becomes inferior, and when the included amount of said elements is more than 2wt%, the dispersibility falls remarkably, so that they are not desirable. In addition, about the carbon powder including two or more of these elements such as sulfur, nitrogen, etc., it is desirable that the amount of sums is less than 2wt%.

It is desirable that the particle size of the carbon powder is 0.5-0.01 microns (5-460 m²/g of BET specific surface areas). If the particle size is too smaller than said value, the dispersibility is low and an adjustment of the particle size also becomes difficult. Moreover, if the particle size is too larger than said value, the dispersibility falls, so that they are not desirable. Moreover, as the carbon particle, graphite is desirable and the tabular crystal is more desirable.

As mentioned above, the carbon particle of this invention includes the predetermined amount of sulfur, nitrogen, etc., respectively with oxygen and the said particle has the high adhesive strength to the electrode (negative electrode) in the electrolytic solution, such as the dilute sulfuric acid, etc. Moreover, this oxygen, sulfur and nitrogen, etc. is not eluted substantially by the boiling test. In addition, since this carbon particle has the diffraction line which shows the specific diffraction profile in X-ray diffraction, it is thought that these oxygen, sulfur and nitrogen, etc., are different from ones which is only being stuck to the carbon-particle surface, and at least has been fixed to the surface structure of the carbon particle. Moreover, it is thought that the surface charge on the carbon powders increases remarkably by fixing in this surface structure, and so that the strong electrophoresis to the negative electrode occurs and the carbon particle of this invention adheres to the negative electrode strongly.

### [The way of the treatment]

The carbon powder of this invention, that is characterized to enhance the adhesive nature to the negative electrode by including 0.1-2wt% of one or more of sulfur, nitrogen, boron, phosphorus, and fluorine, can be obtained, by doing the surface treatment of the carbon powder to use strong acid which has the oxidation work including one or more of sulfur, nitrogen, boron, phosphorus, and fluorine, or, the strong acid which is added the oxidizing agent with including one or more of said elements. Concretely, for example, it can be obtained with the surface treatments, i.e., (A) the surface treatment by the strong acid which is added the oxidizing agent in strong acids of sulfuric acid group, poly-phosphoric acid, or hydrofluoric acid, and (B) the surface treatment by the mixed acids of nitric acid and the strong acids of sulfuric acid group, poly-phosphoric acid, hydrofluoric acid, boric acid, or phosphoric acid.

As the oxidizing agent, the arbitrary oxidizing agents, which indicate the oxidizing property in strong acids, can be used. For example, it can be mentioned that permanganate, such as potassium permanganate and sodium permanganate, chromic acid, ozone, hydrogen peroxide, and lead dioxide, etc. Moreover, nitrate, such as potassium nitrate and sodium nitrate, can also be used as the oxidizing agent besides nitric acid. In these oxidizing agents, nitric acid is preferable, and the nitric acid aqueous solution over 30wt% is more preferable.

The typical one of sulfur including strong acid is sulfuric acid and, in this invention, it can be used that sulfuric acid or a sulfur including inorganic acid or a sulfur including organic acid which have more oxidizing property than sulfuric acid. As a stronger acid (super acid) than sulfuric acid, there is fuming sulfuric acid, chlorosulfuric acid, fluorosulfuric acid, boric sulfuric acid [HB(HSO₄)₄], or trifluoromethane sulfonic acid (these are called for strong acids of sulfuric acid group). The sulfuric nitric acid, which is mixed with sulfuric acid and nitric acid, is the most general strong acid of sulfuric acid group, which is added with oxidizing agent.

As nitrogen including strong acid, nitric acid is mainly used. Condensed nitric acid can be used independently as the strong acid which has the oxidation work. As the boron including strong acid, the above-mentioned boric sulfuric acid, a boric acid compound [HB [HB (OC₂H₅)₄], etc. can be used. As the phosphorus including strong acid, poly-phosphoric acid [(PₙO₃ₙ₊₁) ⁽ⁿ⁺²⁾⁻ (n≥2)] etc. can be used. Moreover, as the fluorine including strong acid, fluorosulfuric acid, trifluoromethane sulfonic acid, magic acid, hydrofluoric acid, etc. can be used. These strong acids are chosen according to the kind of elements introduced with oxygen. In addition, although boric acid and phosphoric acid are weak acids, these can be used as strong acid of oxidizing by mixing nitric acid so much more than these acids. For example, it is good to mix to use 5-100 moles of nitric acid to 1 mole of boric acid or 1 mole of phosphoric acid.

As the acids used for this surface treatment, pure form (100% solution) is good, or the solution, which is diluted with the solvent, is also good. In addition, although water is usually used as a diluting solvent, an organic solvent can also be used if it does not react with acid or the oxidizing agent, which are used for the surface treatment. As an example of such the organic solvent, there are lower aliphatic carboxylic acid (acetic acid etc.), sulfonic acid (benzenesulfonic acid, toluensulfonic acid, etc.), hydrogenated aromatic hydrocarbon (chlorotoluene etc.), and nitrogenated solvents (nitromethane, nitrotoluene, nitrobenzene, etc.). In addition, for example, in the case of sulfuric acid, the concentration of the treatment solution is suitable over 25wt%, preferably over 50wt%, and more preferably over 90wt%. In the case of other strong acid, the concentration having the acidity, which corresponds to the concentration of said sulfuric acid solution, is good. If the acidity is high, it is good that the concentration is lower than said sulfuric acid concentration. In addition, when the acidity of this surface treatment solution becomes higher, the ratio of oxygen and sulfur, etc., which were introduced in the carbon powder, becomes also higher.

The additional amount of the oxidizing agent to the acid of the surface treatment solution, which is also varied with the kind of acid and oxidizing agent, is preferable for the range, where the mole ratio of oxidizing agent / acid is 0.001-100, on the content basis, which does not include the solvent, and more preferably 0.1-20. Concretely, in the case of the sulfuric nitric acid, which is added with nitric acid to sulfuric acid as the oxidizing agent, the solution, in which 0.001-100 moles of nitric acid is mixed with sulfuric acid 1 mole, is preferable, and more preferably 0.1-20. In addition, in the additional amount of the oxidizing agent to the carbon powder, the amount, in which the weight ratio of oxidizing agent/carbon powder becomes over 0.01, is preferable, and more preferably over 0.1.

Surface treatment of the carbon powder can be done at the temperature from the room temperature to the boiling point. In general, the heat treatment under 60-180°C is suitable. Stirring of the liquid under the treatment is not necessarily required. The surface treatment is done until the predetermined amount of oxygen, sulfur and nitrogen is introduced into the carbon powder. For example, when the oxidizing agent is nitric acid or nitrate, the guideline of the completion of the treatment can be judged by stopping emitting of the nitrous acid, which is the reduction product of nitric acid, to the atmospheric air. The treatment time becomes short, when the treatment temperature is high. For example, when treatment temperature is 70°C, the treatment time is required for several hours, but when the temperature is 140°C, the treatment may be completed in about several ten minutes.

In addition, the dry-type treatment using the gas including the target elements can also be done, other than the surface treatment using the strong acid solution of the oxidizing property mentioned above. That is to say, the mixed gas of fluorine and at least one kind of gases, which are chosen from oxygen, carbon dioxide, or sulfur dioxide, etc., is contacted to the carbon powder, and fluorine is introduced to the carbon powder. In this case, the gas which is diluted by inert gases, such as nitrogen gas and argon gas etc., is also suitable. In addition, by the method that fluorine gas is contacted after making sulfur dioxide gas to adhere to the carbon powder beforehand, the treatment can be done more efficiently and lastingly.

### [Activator]

The carbon powder of this invention is suitable as the activator of the secondary battery. This secondary battery activator can be used as the dispersed composition, which made to disperse the carbon powder to the polar solvent. As the polar solvent, the following solvents are used, i.e., water, alcohols (methanol, ethanol, propanol, isopropanol, butanol, etc.), ethers (diethyl ether, etc.), ketones (methyl ethyl ketone, methyl isobutyl ketone, isophorone, etc.), lower aliphatic carboxylic acid (acetic acid, etc.), polar solvents including nitrogen (N, N,- dimethylformamide, hexamethylphosphoramide, nitromethane, N-methyl-pyrrolidone, etc.), polar solvents including sulfur (dimethyl sulfoxide, etc.) ,etc., are used. As the polar solvents, one kind of single solvent or any of two or more of mixed solvents is sufficient respectively. In addition, if it is small amount (50wt% or less of the whole solvent), it is possible that the polar solvent for use and the nonpolar solvent having compatibility with said polar solvent are mixed to be used. Moreover, the dispersed composition, which made the carbon powder of this invention to disperse in the sulfuric acid aqueous solution, can be used as the lead storage battery activator. In the lead storage battery, since sulfuric acid is the electrolytic solution, which works as the active material, it becomes easy to adjust the solution, which made the carbon powder to disperse in the sulfuric acid aqueous solution, at the time of adding to the lead storage battery. The content of the carbon powder in the dispersed composition is suitable for 0.001 - 100wt%, and preferably 0.01 - 10wt%.

Anyone of the state of paste or liquid is sufficient as these dispered composition. Said composition of liquid state has good compatibility to the electrolytic solution, and has the advantage to disperse homogeneously and quickly. Moreover, since the paste state of said composition can control the addition with very small amount, keeping the good compatibility with the electrolytic solution, so that it does not have the concern which breaks down the concentration balance of the electrolytic solution.

Moreover, the carbon powder of this invention is used as the secondary battery, which is added with said carbon powder in the electrolytic solution or to the electrode active material, or made these carbon powders to adhere to the electrode surface. This amount of addition of the carbon powder is the amount, in which the cell does not make the electric short circuit. Concretely, for example, said amount of addition is the amount including 0.001-1wt% in the electrolytic solution. This amount of use is less than the conventional carbon powder, and even when this amount of use is little, the sufficient activation effect is demonstrated. Moreover, the secondary battery, which is added with the carbon powder of this invention beforehand, has the long cell life. Moreover, the charge/discharge ability can be reproduced by adding the carbon powder of this invention to the secondary battery which became the charge/discharge disable. Concretely, 50% or more of the rated capacity of the secondary battery can be made to recover discharge capacity, by adding the carbon powder of this invention to the secondary battery, in which the discharge capacity fell to less than 50% of the rated capacity.

### The best form to do this invention.

Hereafter, this invention is shown concretely with the examples.

### [Example 1]

About the carbon powders shown in Tables 1 and Table 2, the surface modified carbon powders can be obtained by using the treatment solution in Table 2, doing the surface treatment by heat-processing according to the process conditions of the Table 2, cooling to the room temperature to wash after heating, and drying. Moreover, instead of this wet acid process (Process 1), the dry process (Process 2) was done, where the mixed gas of fluorine gas (3vol%), oxygen gas (5vol%), sulfur dioxide gas (5vol%), and nitrogen gas (5vol%) were contacted for 3 minutes with the above-mentioned carbon powders. Furthermore, as the reference samples, the surface treatment was similarly done to this carbon powder, by using 63% concentration of nitric acid, fuming-sulfuric-acid solution, and 98% concentration of sulfuric acid (reference examples B1-B3). About the content of these oxygen, sulfur, nitrogen, boron, phosphorus, and fluorine in the carbon powder, these values before the process was shown in Table 1, and said values after the process was shown in Table 3, with the oxygen ratio and dispersibility. From this Table 3, it is clearly shown that the samples concerning this invention (No.A1-A8) have excellent dispersibility, but the reference sample (No.B1) has little few amounts of nitrogen, and its dispersibility is low. The reference sample (No.B-2) also has few amounts of sulfur and nitrogen, and its dispersibility is inferior. About the reference sample (No.B3), in which the oxidizing agent was not used, since it has few amounts of oxygen, its dispersibility is inferior.

### [Example 2]

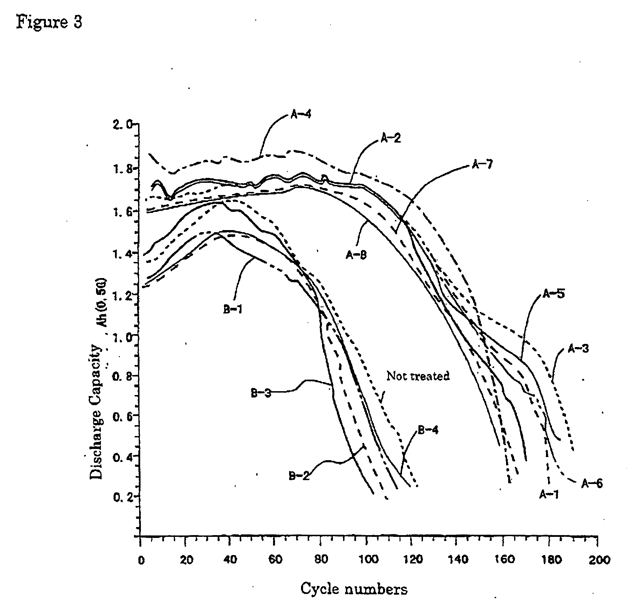

The surface-modified carbon powders obtained in Example 1 was added to the dilute-sulfuric-acid solution, and dispersed by impressing the supersonic wave. The lead storage battery was filled up, using this distributed liquid (0.01wt% of solid-content and 37.7% concentration of sulfuric acid) as the electrolytic solution, and was charged, so that the lead storage battery, in which the modified carbon powders adhered to the electrode surface, was obtained. The charge/discharge test was done about this lead storage battery. This result was shown in Fig. 3. As shown in the figure, all samples (No.A1-A8), which were added with the carbon powder of this invention, had the large discharge capacity of the cell, and even when the charge/discharge was repeated about 120 times, there was very small fall of discharge capacity. On the other hand, when the number the charge/discharge times exceeded about 40 times, the discharge capacity of the reference sample (No.B1-B4) fell rapidly.

### [Example 3]

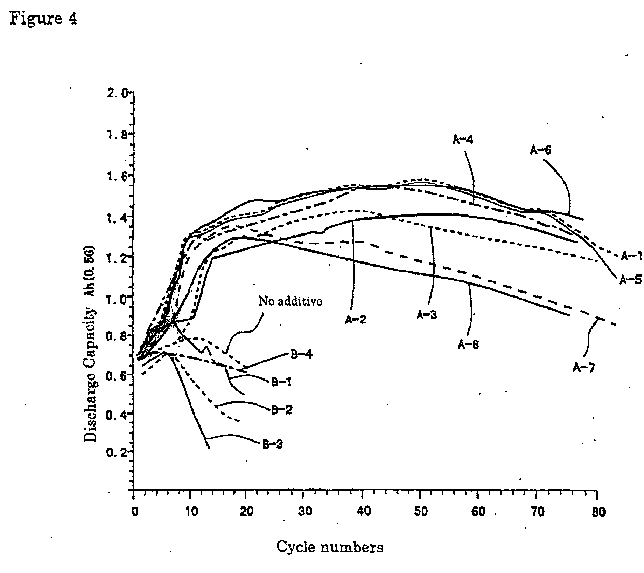

The dispersed liquid of Example 2, which dispersed the carbon powder, was added to the electrolytic solution of the lead storage battery, in which the charge/discharge became the disable (the amount of charge discharges was less than 50% of the rated capacity), and the charge/discharge test was done about this lead storage battery. This result is shown in Fig. 4. As shown in the figure, discharge capacity of the said battery, which was added the carbon powder of this invention (No.A1-A8), recovered rapidly by repeating the charge/discharge about 10 times, and high discharge capacity was kept, while repeating the charge/discharge about 80 times. On the other hand, the charge/discharge capacity of any reference samples using the carbon powders out of this invention (No.B1-B4) was not recovered, and discharge capacity fell further by repeating the charge/discharge.

### [Example 4]

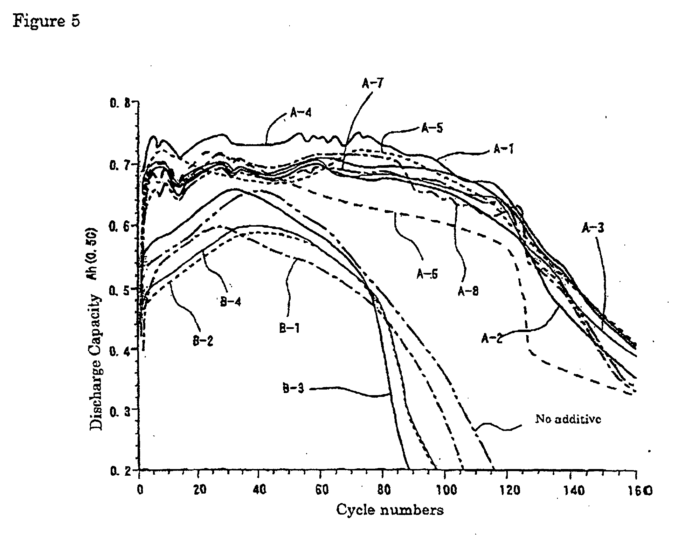

0.03wt% of the surface modified carbon powder obtained in Example 1 and dilute sulfuric acid were added to mix with the lead powder, to obtain the paste. The electrode material, in which the surface modified carbon powders were added to the active material, was obtained by filling up with this paste in the lattice-like lead alloy, aging after drying only the surface, dipping in the dilute-sulfuric-acid electrolytic solution, and oxidizing/reducing through the direct current. As using this material as the electrodes, the fine hole polypropylene separator and the fiberglass mat were inserted between the positive electrode and the negative electrode to built the cell, and the dilute sulfuric acid was poured in said cell as the electrolytic solution. The charge/discharge test was done about the lead storage battery in which this surface modified carbon powders were added to the electrode active material. This result was shown in Fig. 5. As shown in this figure, any batteries, which were added the carbon powders of this invention (No.A1-A8), also had the large discharge capacity of the cell, and even when the charge/discharge was repeated about 120 times, there was very few fall of discharge capacity. On the other hand, as for the reference samples (No.B1-B4), when the number of times of the charge discharge exceeded about 40 times, the discharge capacity fell rapidly.

### Availability on industry

The surface modified carbon powder of this invention has the good adhesive strength or clectrophoretic nature to the negative electrode, and exhibits the excellent effect in the prolongation of life and the charge regeneration of the secondary battery. Therefore, the surface modified carbon powder of this invention is suitable as the activator of the secondary battery. When this surface modified carbon powder is used as the dispersed compositions which has the state of the paste or liquid, in which this carbon powder is dispersed in the polar solution, it is easy to handle. The mode of application to the secondary battery is not restricted, so that the said battery can use this carbon powder in various modes, such as adding to the electrolytic solution, adding to the electrode active material, or the state adhering to the electrode surface.

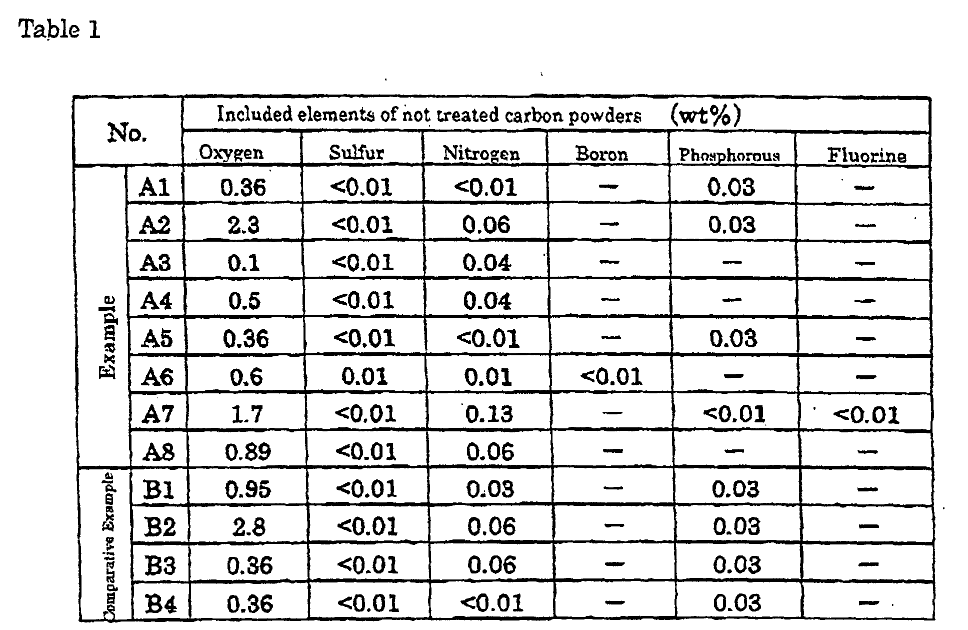

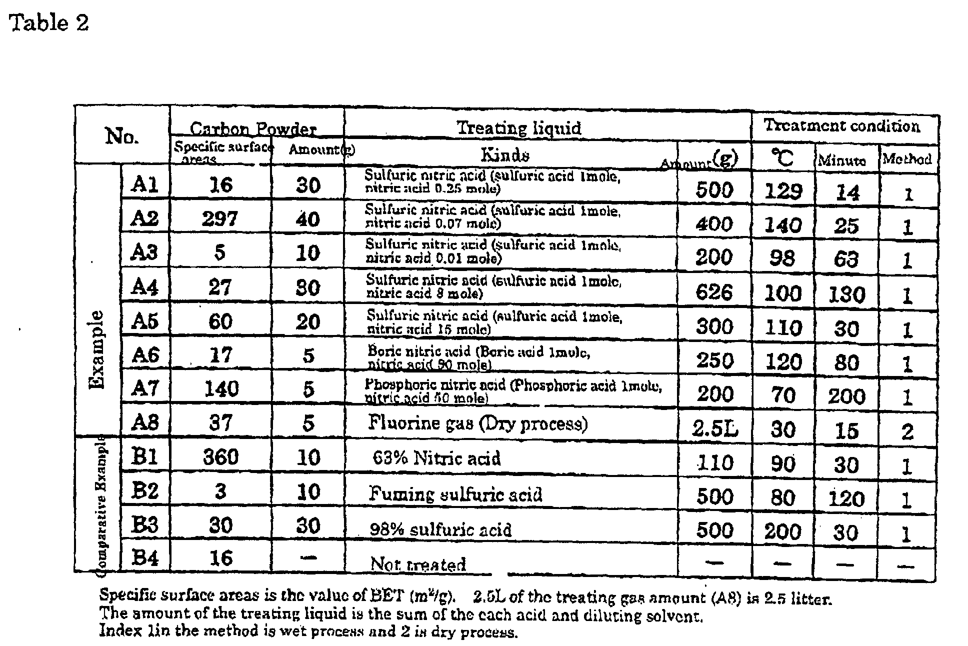

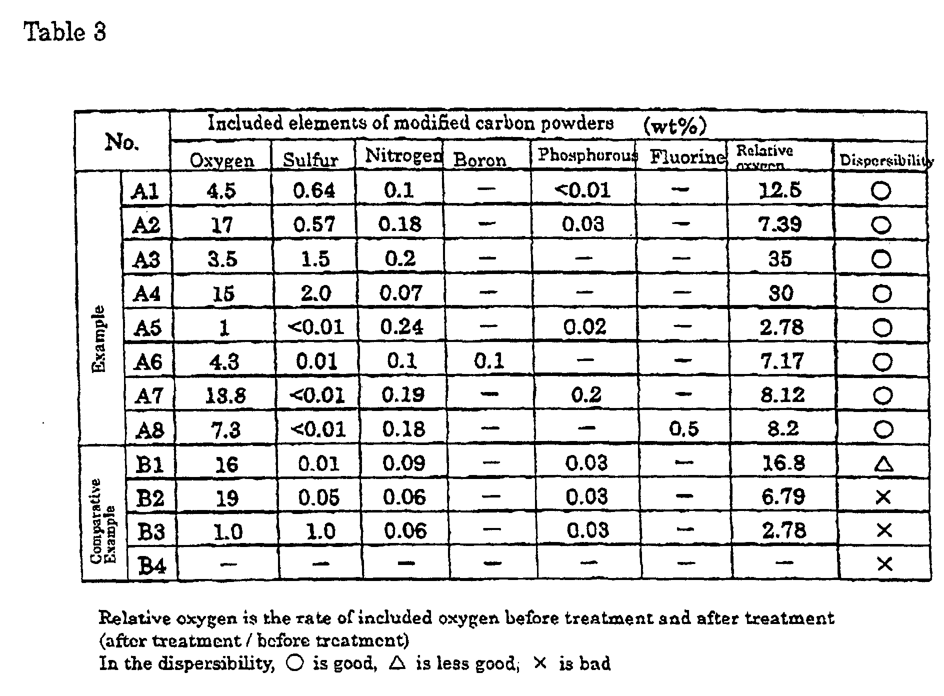

## Claims

1. The carbon powder characterized by enhancing the adhesive strength to the negative electrode, and said powder including,
0.1 - 2wt% of one or more than two of sulfur, nitrogen, boron, phosphorus, and fluorine, with 1 - 20wt% of oxygen.

2. The carbon powder characterized by enhancing the adhesive strength to the negative electrode, and said carbon powder including,
one or more than two of sulfur, nitrogen, boron and phosphorus, with oxygen, and said powder having,
a diffraction line which has a loose gradient toward the diffraction peak of [002] face, in the range from 20 degrees of the diffraction angle (2θ) to the diffraction peak of [002] face, in an X-ray diffraction figure, when the source of Cu-K A rays is used as X radiation source.

3. The carbon powder according to claim 2 having,
the diffraction line which has the gradient passing the point, in which the relative intensity to the diffraction line strength of [002] face shows 1/50 times or more, and tends toward the diffraction peak of [002] face, in the range from 23.5 to 24.5 degrees of the diffraction angle (2θ).

4. The carbon powder according to claims 1, 2, or 3 at least including,
1 - 20wt% of oxygen and 0.1 - 2wt% sulfur in the surface structure.

5. The carbon powder according to the claims 1, 2, or 3 characterized by enhancing the adhesive strength to the negative electrode, and said carbon powder including,
0.1 - 2wt% of one or more than two of sulfur, nitrogen, boron, phosphorus, and fluorine with 1 - 20wt% of oxygen,
and said carbon powder being done,
by the surface treatment with the strong acid which having the oxidation work including one or more than two of sulfur, nitrogen, boron, phosphorus, and fluorine, or
by the surface treatment with the strong acid which is added the oxidizing agent including one or more than two of said elements.

6. The carbon powder according to claim 5 being done,
by the surface treatment with the strong acid which is added the oxidizing agent in the strong acid of sulfuric acid system, poly phosphoric acid, or hydrofluoric acid.

7. The carbon powder according to claim 5 being done,
by the surface treatment by the sulfuric acid system strong acid, poly phosphoric acid, hydrofluoric acid, boric acid, or the mixed acid of phosphoric acid and nitric acid.

8. The carbon powder according to one of the claims 1-7 being used as the activator of the secondary battery.

9. The secondary battery activator characterized with the dispersed composition material and said material comprising,
the dispersed carbon powder according to one of the claims 1-7 in the polar solvent.

10. The lead storage battery activator characterized with the dispersed composition material and said material comprising,
the dispersed carbon powder of one of the claims 1-7 in the sulfuric acid aqueous solution.

11. The secondary battery activator according to claims 9 or 10, wherein the dispersed composition material is the shape of the paste or liquefied.

12. The secondary battery characterized by being added with the carbon powder of one of the claims 1-7 in the electrolytic solution.

13. The secondary battery characterized by being added with the carbon powder of one of the claims 1-7 to the electrode active material.

14. The secondary battery characterized by making the carbon powder of one of the claims 1-7 to adhere to the electrode surface.
